# EUROPÄISCHE PATENTANMELDUNG

(11) **EP 1 046 926 A2**
(43) Veröffentlichungstag der Anmeldung: **25.10.2000**
(21) Anmeldenummer: 00107347.7
(22) Anmeldetag: 05.04.2000
(51) Int. Cl.: G01S 13/34, G01S 7/35

(54) **Einrichtung zur Erhöhung des Dynamikbereichs von frequenzmodulierten Dauerstrichradaren**

(30) Priorität: 24.04.1999 DE 19918767
(71) Anmelder: DaimlerChrysler AG, 70567 Stuttgart (DE)
(72) Erfinder: Solbach, Klaus, Prof. Dr., 45473 Mülheim (DE)

(57) **Zusammenfassung**

Eine Einrichtung zur Erhöhung des Dynamikbereichs von frequenzmodulierten Dauerstrichradaren bestehend aus einem Sender, einer Sende/Empfangsantenne, einer Empfängerschaltung und einem Zirkulator. Der Zirkulator leitet die Sendesignale des Senders an die Sende/Empfangsantenne weiter und führt die Echosignale eines Zielobjekts zum Eingang der Empfängerschaltung, die anhand der Sende- und Echosignale ein Zwischenfrequenzsignal erzeugt, das eine dem Abstand des Zielobjekts entsprechende Differenzfrequenz aufweist. Eine mit Regelverstärkern ausgestattete RPC-Schaltung wird zwischen Ausgang und Eingang der Empfängerschaltung bereitgestellt, wobei der Frequenzgang der Regelverstärker so gewählt wird, daß der Auslöschungsgrad oberhalb der Grenzfrequenz des Regelverstärkers in einem vorgebbaren Maß mit der steigenden Differenzfrequenz abfällt.

## Beschreibung

Die vorliegende Erfindung betrifft eine Einrichtung zur Erhöhung des Dynamikbereichs von frequenzmodulierten Dauerstrichradaren.

Bei Radar-Systemen wird im weiten Sinn zwischen Puls- und Dauerstrich-Konzepte unterschieden.

Das Pulsradar bestimmt die Entfernung eines Zielobjekts zu einem Radarempfänger aus der Laufzeit der von einem Zielobjekt reflektierten Pulse (sogenannte Echosignale). Zum Ausgleich der starken Unterschiede der im Radarempfänger zu verarbeitenden Echosignalen aus kurzer und großer Entfernung (Nahechos bzw. Fernechos), der sogenannten Entfernungs-Dynamik, wird im Pulsradar die Empfindlichkeit des Radarempfängers als Funktion der Zeit (Sensitivity Time Control = STC) geregelt, so daß am Anfang der Empfangsperiode kleine Empfindlichkeiten mit großen Echopegeln aus dem Nahbereich und umgekehrt zusammentreffen.

Das Dauerstrichradar arbeitet im Gegensatz zum Pulsradar mit einem kontinuierlich ausgestrahlten Sendesignal. Während beim Pulsradar das Sendesignal vom Echosignal dadurch getrennt werden kann, daß beide Signale zu verschiedenen Zeiten auftreten, erfolgt beim Dauerstrichradar die Trennung und Unterscheidung von Sende- und Echosignalen durch die Modulation der Welle, in der Praxis mittels Frequenzmodulation.

Beim Dauerstrichradar, im Besonderen beim frequenzmodulierten CW-Radar (FM-CW-Radar) kann das vom Pulsradar her bekannte Konzept der zeitabhängigen Empfindlichkeit des Radarempfängers nicht angewendet werden, da alle Echosignale des Zielobjekts immer gleichzeitig zu verarbeiten sind, also keine Unterscheidung in der Zeit möglich ist.

Hier ist bekannt, daß die Dynamik der im Radarempfänger aus den Echosignalen erzeugten Video- bzw. Zwischenfrequenzsignale vor der Weiterverarbeitung - über z. B. eine Analog/Digital-Wandlerstufe - dadurch verringert wird, daß ein geeignet dimensioniertes Hochpassfilter eingesetzt wird. Damit werden die tiefen Videofrequenzen, die zu Nahzielen (Nahechos) gehören, stärker abgesenkt als höhere Videofrequenzen, die zu weiter-ab liegenden Zielen (Fernechos) gehören.

Diese Maßnahme greift allerdings erst hinter dem Hochfrequenzteil des Radarempfängers, wobei beim Zusammentreffen mehrerer Signale und vor allem von Signalen mit sehr unterschiedlichen Pegeln (wie Nah- und Fernechos) durch Intermodulation und andere nichtlineare Vorgänge weitere Signale erzeugt werden, die vom Radar als Zielobjekte interpretiert werden (sogenannte unerwünschte Falschziele).

Die Reichweite und andere Systemparameter von frequenzmodulierten Dauerstrichradaren werden daher in starkem Maße von der Großsignalfestigkeit der Hochfrequenzteile des Radarempfängers bestimmt, dem sogen. Dynamikbereich zwischen dem größten verarbeitbaren Signalpegel und der unteren Empfindlichkeitsgrenze (Rauschpegel). Nach dem Stand der Technik werden bei herkömmlicher Auslegung von solchen Radarempfängern z. B. 60 dB erreicht, mit besonders leistungsfest ausgelegten und mit entsprechend hohen Strömen und Lokaloszilatorleistungen angesteuerten Eingangsstufen und Mischern auch bis zu 90 dB.

Eine Aufgabe der Erfindung ist es daher, eine Einrichtung zu schaffen, die eine Erhöhung des Dynamikbereichs von frequenzmodulierten Dauerstrichradaren herbeiführt.

Eine weitere Aufgabe der Erfindung ist es, einen Empfänger für ein frequenzmoduliertes Dauerstrichradar zu schaffen, der mit geringen Leistungen auskommt.

Im Rahmen der obigen Aufgaben ist es ein besonderes Ziel der Erfindung, einen Empfänger für ein frequenzmoduliertes Dauerstrichradar zu schaffen, der für eine monolitische Integration (Microwave Monolithic Integrated Circuit = MMIC) - z. B. für Anwendungen in einem Automobil-Radar - geeignet ist.

Eine weitere Aufgabe der vorliegenden Erfindung besteht in der Bereitstellung eines Radarempfängers, mit einem erhöhten Dynamikbereich und mit einer geringen Leistungsaufnahme, der insbesondere für eine monolitische Integration geeignet ist.

Diese und weitere, der nachfolgenden Beschreibung deutlich entnehmbare Aufgaben werden von der erfindungsgemäßen Einrichtung für ein frequenzmoduliertes Dauerstrichradar und dem Empfänger gemäß den anliegenden Ansprüchen gelöst.

Weitere Merkmale und Vorteile sind deutlicher der folgenden Beschreibung eines bevorzugten Ausführungsbeispiels der erfindungsgemäßen Einrichtung zur Erhöhung des Dynamikbereichs von frequenzmodulierten Dauerstrichradaren unter Hinweis auf die beiliegenden Figuren zu entnehmen, wobei
Fig. 1 ein Blockschaltbild einer Ausführungsform der Einrichtung zur Erhöhung des Dynamikbereichs von frequenzmodulierten Dauerstrichradaren zeigt;
Fig. 2 die Auslegung der Regelverstärkung in einer Schaltung der Fig. 1 zur Unterdrückung des Anteils des Sendesignals, das direkt in die Empfängerschaltung des Radars abgeleitet wird, zeigt, wobei in der Abszisse Frequenz und in der Ordinate Regelverstärkung aufgetragen werden; und
Fig. 3 die erfindungsgemäße Auslegung der Regelverstärkung in der Einrichtung zur Erhöhung des Dynamikbereichs von frequenzmodulierten Dauerstrichradaren der Fig. 1 zeigt, wobei in der Abszisse Frequenz und in der Ordinate Regelverstärkung aufgetragen werden.

Die Erfindung geht von der an sich bekannten Schaltung zur Unterdrückung des Anteils des Sendesignals, das direkt in die Empfängerschaltung des Radars abgeleitet wird, aus. Diese bekannte Schaltung wird nachstehend als RPC-Schaltung (RPC = Reflected Power Canceler) bezeichnet. Eine RPC-Schaltung ist z. B. aus "Solving the problems of a single antenna frequency modulated CW Radar", P. D. L. Beasley et al., 1990 IEEE International Radar Conference, pp. 391-395 bekannt. Eine ähnliche Schaltung, die als "Feed Through Nuller" bezeichnet wird, ist in "A high performance CW receiver using feedthru Nulling", F. J. O'Hara et al., Microwave Journal, Sept. 1963, pp. 63-71 offenbart.

Diese bekannten Schaltungen stellen eine Regelschleife bereit, in der das auf den Eingang der Empfängerschaltung zulaufende reflektierte Signal aus einer Antenne mit einem weiteren aus einem Sender abgeleiteten gegenphasigen Signal so überlagert wird, daß eine vollständige Auslöschung erzielt wird. Auf diese Weise wird vor allem die nachteilige Überkopplung des Sender-Rauschens auf die Empfängerschaltung unterdrückt. Diese bekannte Lösung berücksichtigt jedoch keineswegs den veränderlichen Abstand zu einem zu erfassenden Zielobjekt.

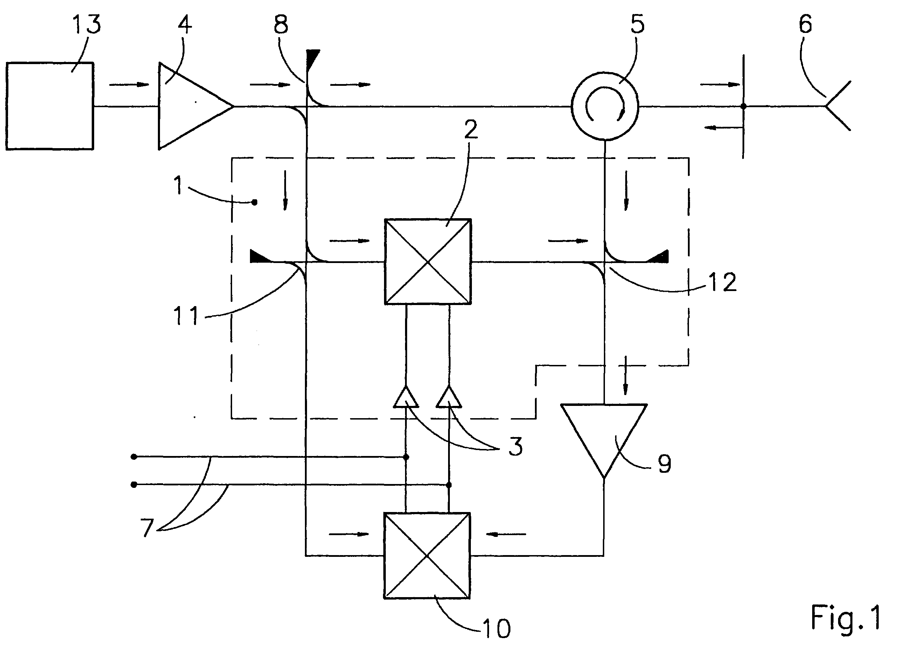

Das Konzept der bevorzugten Ausführungsform der Erfindung wird nunmehr unter Bezugnahme auf die Fig. 1 erläutert. Obwohl die bevorzugte Ausführungsform der Erfindung im Zusammenhang mit einen Empfänger eines frequenzmodulierten Dauerstrichradars gezeigt wird, versteht sich von selbst, daß der Empfänger nicht auf derartige Radaranwendungen beschränkt ist, sondern vielmehr in weiteren den Fachleuten wohlbekannten Anwendungen zur Erhöhung des Dynamikbereichs einer Schaltung einsetzbar ist.

Die Ausführungsform der Fig. 1 umfaßt die an und für sich bekannte RPC-Schaltung 1 mit einem I/Q-Modulator (Vektor-Modulator) 2 und jeweilige Regelverstärker 3 für die im Zwischenfrequenzbereich befindliche I- und Q-Signale. In Fig. 1 werden zwei Regelverstärker für die jeweiligen I-und Q-Signale gezeigt; es ist jedoch durchaus denkbar, daß die Anzahl der Regelverstärker in Übereinstimmung mit den jeweiligen Erfordernissen an die erfindungsgemäße Einrichtung zur Erhöhung des Dynamikbereichs von frequenzmodulierten Dauerstrichradaren größer oder geringer ausgewählt wird.

Ein schematisch dargestellter Sender 13 eines frequenzmodulierten Dauerstrichradars weist eine Endstufe 4 auf. Die Endstufe 4 überträgt über einen Zirkulator (oder eine Richtungsgabel) 5 das Sendesignal des frequenzmodulierten Dauerstrichradars zu einer Sende/Empfangsantenne 6. Ein Teil des Sendesignals wird - wie aus der Fig. 1 ersichtlich - durch einen ersten Richtungskoppler 8 ausgekoppelt und der RPC-Schaltung 1 zugeführt. Die Echosignale werden durch die Antenne 6 und den Zirkulator 5 einem rauscharmen HF-Empfänger-Verstärker 9 zugeführt, der seinerseits die verstärkten Echosignale in einen Empfänger-Mischer 10 einspeist. Der Empfänger-Mischer 10 wird weiterhin mit einem Teil des durch einen zweiten Richtungskoppler 11 ausgekoppelten Sendesignals versorgt, und erzeugt in einer an und für sich bekannten Weise Zwischenfrequenzsignale 7, die zur Steuerung der RPC-Schaltung 1 eingesetzt werden.

Der Zirkulator 5 ist ausgebildet, um Sendesignale von den empfangenen Echosignalen zu trennen. Ein Teil der Leistung des Sendesignals wird jedoch ohne vorherige Abstrahlung auf das Zielobject durch den Zirkulator 5 in den Empfänger-Verstärker 9 abgeleitet und verfälscht die von der Antenne 6 herrührenden Echosignale, was zu einer allgemeinen Verschlechterung der Empfindlichkeit des Empfängers führen kann. Weiterhin kann ein Teil der Leistung des Sendesignals durch die Antenne 6 reflektiert werden.

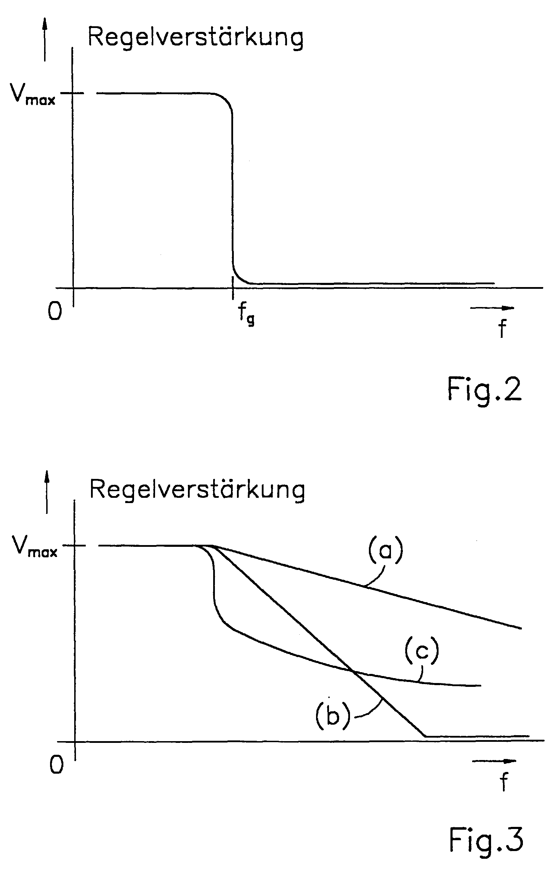

Zur Vermeidung des obigen Phänomens, wird in der RPC-Schaltung 1 die Regelschleife so ausgelegt, daß die von der Antenne 6 selbst reflektierte Leistung des Sendesignals (bzw. die durch den Zirkulator abgeleitete Leistung des Sendesignals) durch Überlagerung mit einem ebenso großen und gegenphasigen durch den I/Q-Modulator 2 erzeugten Signal kompensiert wird, das durch einen dritten Richtungskoppler 12 in den zwischen dem Zirkulator und Verstärker liegenden Pfad eingekoppelt wird. Dazu wird der Frequenzgang des Regelverstärkers 3 der bekannten RPC-Schaltung 1 entsprechend der Fig. 2 scharf begrenzt, und zwar bei einer oberen Grenzfrequenz fg, die der höchsten Differenzfrequenz des Zwischenfrequenzsignals 7 (bzw. der Video-Frequenz) entspricht, die zwischen der aktuellen Sendefrequenz und der aus der Antenne 6 rücklaufenden Welle (Echosignal ohne Abstrahlung) auftritt.

Der vorliegenden Erfindung liegt erstens zu Grunde, daß die Differenzfrequenz proportional mit zunehmender Entfernung zunimmt. Bei Erhöhung der Regelungsbandbreite des Regelverstärkers 3 durch die Anhebung seiner Grenzfrequenz fg können dementsprechend auch Echosignale aus einer gewissen Entfernung vor dem Radar unterdrückt werden.

Weiterhin wurde ermittelt, daß der Grad der Kompensation bzw. die Tiefe der Auslöschung der Echosignale des Zielobjekts stark von der Größe der Regelverstärkung des Regelverstärkers 3 abhängig ist, da der Restfehler der Ausregelung mit steigender Verstärkung abnimmt. Bei praktischen Realisierungen der RPC-Schaltung 1 werden z. B. Unterdrückungswerte um 50 dB erreicht, entsprechend einem Rest des Eingangssignals des Empfängers von l/100000 des ursprünglichen Wertes.

Die Erfindung sieht nun besonders vorteilhaft vor, daß der Frequenzgang des Regelverstärkers 3, der ein Teil der Regelschleife darstellt, so gewählt wird, daß der Auslöschungsgrad oberhalb der Grenzfrequenz fg in einem vorgebbaren Maß mit steigender Differenzfrequenz (Video-Frequenz) abfällt.

Das kann in der Praxis durch eine geeignete Formung des Frequenzganges des Regelverstärkers 3 vorgenommen werden, wie in der Fig. 3 gezeigt, wobei drei verschiedene qualitative Verläufe darin eingetragen sind.

Der Verlauf der Kurve (a) führt zu höchstmöglicher Auslöschung der Zielechos im Nahbereich mit flachen Abfall für zunehmende Entfernung.

Der Verlauf der Kurve (b) zeigt dagegen einen steileren Abfall der Auslöschung mit der Entfernung, so daß völlige Wirkungslosigkeit der Regelung schon bei kürzeren Entfernungen erreicht werden kann. In diesem Fall ähneln die Verhältnisse denen, die ganz ohne die Regelschaltung eintreten.

Die Kurve (c) zeigt einen Verlauf, der im Nahbereich durch einen tieferen Anfangswert der Regelverstärkung oberhalb der Grenzfrequenz fg nicht die volle Auslöschungshöhe erzeugt und der darüber hinaus eine andere Entfernungsabhängigkeit der Auslöschungshöhe durch andere Formung oberhalb der Grenzfrequenz fg erzeugt als die Kurven (a) und (b).

Wie aus der vorangegangenen Beschreibung hervorgeht, erfüllt die erfindungsgemäße Lösung die gestellten Aufgaben. Auf diese Weise wird eine Einrichtung zur Erhöhung des Dynamikbereichs von frequenzmodulierten Dauerstrichradaren vorgeschlagen, die mit relativ geringen Leistungen auskommt und für die monolitische Integration für Automobil-Radar-Anwendungen geeignet ist. Letzteres wird insbesondere durch die Vermeidung des bei herkömmlichen Anwendungen erforderlichen Hochpassfilters realisiert, das wie vorstehend erläutert nach dem Hochfrequenzteil des Radarempfängers eingeschleift wird. Dadurch werden erfindungsgemäß besonders vorteilhaft auch die bei herkömmlichen Lösungen durch Intermodulation und andere nichtlineare Vorgänge entstehenden falschen Echos bzw. die sogenannten unerwünschten Falschziele vermieden.

## Patentansprüche

1. Einrichtung zur Erhöhung des Dynamikbereichs von frequenzmodulierten Dauerstrichradaren, die folgendes umfaßt:
einen Sender (13)
eine Sende/Empfangsantenne (6)
eine Empfängerschaltung (9, 10)
einen Zirkulator (5) zur Weiterleitung der Sendesignale des Senders (13) an die Sende/Empfangsantenne (6) und zur Ableitung der Echosignale eines Zielobjekts in den Eingang der Empfängerschaltung (9, 10), wobei die Empfängerschaltung (9, 10) ausgebildet ist, um anhand der Sende- und Echosignale ein Signal (7) zu erzeugen, das eine dem Abstand des Zielobjekts entsprechende Differenzfrequenz aufweist, und
eine zwischen Ausgang und Eingang der Empfängerschaltung (9, 10) geschaltete RPC-Schaltung (1) mit einer Regelverstärkereinrichtung (3), wobei der Frequenzgang der Regelverstärkereinrichtung (3) so gewählt wird, daß der Auslöschungsgrad oberhalb der Grenzfrequenz (fg) der Regelverstärkereinrichtung (3) in einem vorgebbaren Maß mit der steigenden Differenzfrequenz abfällt.

2. Einrichtung gemäß Anspruch 1, wobei der Frequenzgang der Regelverstärkereinrichtung (3) in Übereinstimmung mit der Kurve (a) der Fig. 3 ausgebildet ist.

3. Einrichtung gemäß Anspruch 1, wobei der Frequenzgang der Regelverstärkereinrichtung (3) in Übereinstimmung mit der Kurve (c) der Fig. 3 ausgebildet ist.

4. Einrichtung gemäß Anspruch 1, wobei der Frequenzgang der Regelverstärkereinrichtung (3) in Übereinstimmung mit einer Kurve ausgebildet ist, die zur höchstmöglichen Auslöschung der Zielechos im Nahbereich führt und die einen flachen Abfall für zunehmende Entfernung aufweist.

5. Einrichtung gemäß Anspruch 1, wobei der Frequenzgang der Regelverstärkereinrichtung (3) in Übereinstimmung mit einer Kurve ausgebildet ist, die durch einen tieferen Anfangswert der Regelverstärkung oberhalb der Grenzfrequenz (fg) im Nahbereich nicht die volle Auslöschungshöhe erzeugt.

6. Einrichtung gemäß Anspruch 1, wobei der Frequenzgang der Regelverstärkereinrichtung (3) einen linearen Abfall oberhalb der Grenzfrequenz (fg) aufweist.

7. Einrichtung zur Erhöhung des Dynamikbereichs von frequenzmodulierten Dauerstrichradaren, die eine RPC-Schaltung (1) mit einer Regelverstärkereinrichtung (3) umfaßt, wobei die Entfernung zu einem Zielobjekt anhand der Differenzfrequenz zwischen Sende- und Echosignalen ermittelt wird, und wobei der Frequenzgang der Regelverstärkereinrichtung (3) so gewählt wird, daß der Auslöschungsgrad oberhalb der Grenzfrequenz (fg) der Regelverstärkereinrichtung (3) in einem vorgebbaren Maß mit einer steigenden Differenzfrequenz abfällt.
